# EUROPÄISCHE PATENTSCHRIFT

(11) **EP 0 668 982 B1**
(45) Veröffentlichungstag und Bekanntmachung des Hinweises auf die Patenterteilung: **26.05.1999**
(21) Anmeldenummer: 92923734.5
(22) Anmeldetag: 17.11.1992
(51) Int. Cl.: F23J 15/00, F22D 1/36, F23L 15/02, F23K 1/04, F01K 23/10

(54) **FEUERUNGSLANLAGE**
INCINERATION PLANT
USINE D'INCINERATION

(43) Veröffentlichungstag der Anmeldung: 30.08.1995
(73) Patentinhaber: Apparatebau Rothemühle Brandt & Kritzler Gesellschaft mit beschränkter Haftung, 57482 Wenden-Rothemühle (DE)
(72) Erfinder: KARGER, Robert, D-58239 Schwerte (DE); RÜCKERT, Horst, D-44225 Dortmund (DE)
(74) Vertreter: Müller, Gerd, Dipl.-Ing.
(86) Internationale Anmeldenummer: EP9202643
(87) Internationale Veröffentlichungsnummer: WO9411677

(56) Entgegenhaltungen:
- EP-A- 0 148 741
- EP-A- 0 424 864
- DE-A- 3 346 691
- DE-A- 3 505 952
- DE-C- 3 539 001

## Beschreibung

Die Erfindung betrifft eine Feuerungsanlage mit einem im Rauchgasstrom im Anschluß an eine einem Dampferzeuger nachgeschaltete Reduktionsstufe für Stickoxide und vor einem Rauchgasentstauber angeordneten, als Regenerativ-Wärmetauscher ausgebildeten Wärmetauscher, der zur Aufnahme und Rückübertragung von Wärme aus dem Abgas des Dampferzeugers in einem Wärmeträgerkreislauf liegt, der einen weiteren Wärmetauscher zur Aufnahme von Wärme aus dem Wärmeträgerkeislauf aufweist, wobei ein Teil der im Regenerativ-Wärmetauscher erhitzten Luft in dem Kreislauf über den weiteren Wärmetauscher zurück zum Regenerativ-Wärmetauscher strömt.

Derartige Feuerungsanlagen werden nachträglich oder beim Neubau mit katalytischen oder nicht katalytischen Reduktionsstufen für die Stickoxide und einer Rauchgasentschwefelungsanlage ausgestattet. Aus wirtschaftlichen Gründen, d.h. wegen geringerer Wirkungsgradverluste und wegen deutlich niedrigerer Investitionskosten wird die katalytische oder nicht katalytische Reduktionsstufe für die Stickoxide bevorzugt im Rauchgasstrom stromauf von der Wärmerückgewinnung angeordnet. Diese Reduktionsstufe liegt dann auch stromauf von einem bei mit Kohle beheizten Feuerungsanlagen immer erforderlichen Entstauber.

Schwierigkeiten bereiten bei dieser Anordnung die niedrigen Rohrwandtemperaturen eines nach der Reduktionsstufe für die Stickoxide angeordneten Speisewasser- oder Kondensatvorwärmers, da es wegen des nach der Reduktionsstufe bzw. am Ende des Dampferzeugers vorhandenen Ammoniakschlupfes und der Schwefeloxide auf den Heizflächen zu Ablagerungen auf Ammoniumbisulfat und Staub kommt. Diese Ablagerungen sind korrosiv, vermindern den Wärmeübergang und führen zu Verstopfungen. Die Ablagerungen müssen daher durch geeignete Verfahren entfernt werden. Es ist möglich, die Ablagerungen durch Waschen zu entfernen, jedoch müssen die Wärmetauscherflächen konstruktiv entsprechend ausgeführt sein. Dabei ist zum Abwaschen der Ablagerungen ein Kesselstillstand in nicht vorhersehbarer Zeitdauer erforderlich.

Eine andere Möglichkeit, die Wärmetauscherheizflächen von Ablagerungen zu befreien, besteht darin, diese, wenn es sich um Speisewasservorwärmer handelt, zu entleeren und mit heißem Rauchgas bzw. Dampf zu beaufschlagen. Die Rauchgas- bzw. Dampftemperatur muß dabei über der Sublimationstemperatur der Ammoniumsalze liegen. Auch in diesem Fall ist ein Kesselstillstand erforderlich, über deren Häufigkeit und Zeitdauer keine Erfahrungen vorliegen.

Schließlich ist es auch möglich, die Wärmetauscherflächen so groß zu dimensionieren, daß der Wärmeübergang trotz der Ablagerungen bis zu einem üblicherweise erforderlichen Kesselstillstand ausreichend ist. In diesem Falle wären so große Nachschaltheizflächen erforderlich, daß eine derartige Auslegung unwirtschaftlich wäre.

Durch die DE-A-3 505 952 ist ein geschlossener Wärmeträgerkreislauf für die Rauchgasbehandlung in einer Feuerungsanlage der eingangs genannten Art eines Kraftwerkes bekanntgeworden. Dort geht es darum, die Temperatur eines zu entschwefelnden Rauchgases anzuheben. Der hierzu eingesetzte Wärmeträgerkreislauf arbeitet im Niedertemperaturbereich und ist hinter dem Elektro-Entstauber abgeordnet. Um für den Wärmetauscher im Rauchgasstrom den Bereich der Schwefelsäure-Taupunktsunterschreitung auf ein Minimum zu begrenzen, wird die Rauchgasabkühlung auf zwei Wärmeträgerkreisläufe aufgeteilt, deren Arbeitstemperaturen im Bereich von 60 bis 100°C liegen. Als Wärmeträger werden flüssige oder fließfähige feste Medien, wahrscheinlich ein Schüttgut, eingesetzt.

Der Erfindung liegt die Aufgabe zugrunde, eine gattungsgemäße Feuerungsanlage zu schaffen, die eine optimierte Energierückgewinnung zur Vorerwärmung von Teilbereichen, wie einen Speisewasser- oder Kondensatvorwärmer, des Dampferzeugers der Feuerungsanlage ermöglicht, ohne die Gefahr von Ablagerungen und Korrosion bei den Wärmetauscherflächen.

Diese Aufgabe wird erfindungsgemäß dadurch gelöst, daß in dem Regenerativ-Wärmetauscher das Rauchgas und Luft zum Wärmetausch gelangen. Es läßt sich damit eine Energierückgewinnung in einem solchen Temperaturbereich erreichen, bei dem die Wärmetauscherflächen eine Temperatur aufweisen, bei der noch keine erhöhte Gefahr von Ablagerungen besteht bzw. sich die Wärmetauscherflächen leicht von Ablagerungen befreien lassen.

Da sich der Wärmeträger von den in den Rauchgasen enthaltenen Bestandteilen, wie Staub, Ammoniumsulfat und Schwefeloxiden freihalten läßt, kann der zweite Wärmetauscher mit sehr niedrigen Rohrwandtemperaturen betrieben werden, ohne daß die Gefahr von Taupunktunterschreitungen und die Bildung von Ammoniumbisulfat besteht. Der erste Wärmetauscher im Rauchgastrom läßt sich auf einfache Weise so gestalten, daß er sich von hier gegebenenfalls eintretenden Ablagerungen befreien läßt, was mit den vorher beschriebenen Verfahren, d.h. mit Wasser, mit heißem Rauchgas oder mit Dampf geschehen kann.

Zur Vorwärmung von Speisewasser kann ein im Wärmeträgerkreislauf angeordneter Speisewasservorwärmer dienen, da der Wärmetauscher im Rauchgasstrom in einem Temperaturbereich liegt, der hierfür besonders geeignet ist. Stromab vom Speisewasservorwärmer kann im Wärmeträgerkreislauf noch ein Kondensatvorwärmer angeordnet sein, der bei sehr niedrigen Rohrwandtemperaturen betrieben wird. Hierdurch ergibt sich die Möglichkeit, Kondensat mit niedriger Eintrittstemperatur vorzuwärmen, wodurch sich Investitionskostenvorteile wegen kleinerer druckführender Berührungsheizflächen ergeben.

Besonders vorteilhaft ist, wenn die erfindungsgemäße Feuerungsanlage mit ihrem Wärmeträgerkreislauf im Rauchgasstrom eines kombinierten Gasturbinen-Dampfturbinenprozesses angeordnet ist. Der für den Dampfturbinenprozeß benötigte Dampferzeuger kann vorteilhafterweise mit Kohlenstaub nachgefeuert sein, wobei der für die Verbrennung benötigte Sauerstoff in den Abgasen der mit Luftüberschuß betriebenen Gasturbine enthalten ist. Für die Feuerung des Dampferzeugers wird daher keine oder nur wenig zusätzliche Verbrennungsluft benötigt. Aus diesem Grunde sind bei den üblichen Kombikraftwerken die Nachschaltheizflächen am Kesselende als Berührungsheizflächen, z.B. als Teilstromspeisewasservorwärmer ausgeführt. Aufgrund der niedrigen Rohrwandtemperaturen besteht bei der Anwendung der katalytischen oder nicht katalytischen Reduktion von Stickoxiden in den Rauchgasen wegen des nach dem Katalysator bzw. am Ende des Dampferzeugers vorhandenen Ammoniakschlupfes und des Schwefeltrioxides auf den Heizflächen die Gefahr von Ablagerungen, die im wesentlichen aus Ammoniumbisulfat bestehen. Die bisher bekannten Heizflächen lassen sich nicht mit Wasser reinigen. Demgegenüber besteht bei der erfindungsgemäßen Feuerungsanlage mit einem Wärmetauscher im Rauchgasstrom, einem Wärmeträgerkreislauf zur Aufnahme von Wärme aus dem Wärmetauscher im Rauchgasstrom und wenigstens einem Wärmetauscher im Wärmekreislauf zur Aufnahme von Wärme aus dem Wärmeträger und zur Abgabe an wenigstens einen Teilbereich der Feuerungsanlage z.B. an einen Speisewasservorwärmer und/oder einen Kondensatvorwärmer eine erheblich geringere Ablagerungsgefahr, da die Wärmetauscherflächen im Rauchgasstrom konstruktiv geeigneter und nicht so niedrige Temperaturen erreichen wie die Wärmetauscherflächen von direkt im Rauchgasstrom angeordneten Speisewasservorwärmern oder Kondensatvorwärmern. Des weiteren lassen sich die Wärmetauscherflächen leichter reinigen.

Wird Luft als Wärmeträger im Wärmeträgerkreislauf eingesetzt, besteht noch der Vorteil, daß sich ein Teilstrom der erwärmten Luft abzweigen und einer Kohlenstaubmühle und/oder als zusätzliche Verbrennungsluft einem oder mehreren Brennern des Dampferzeugers zuleiten läßt.

Besonders wirkungsvoll läßt sich ein solcher Staubbläser gestalten, wenn eine Luftkammer auf der Rauchgasseite vor einer Radialdichtung angeordnet wird und durch Luft aus dem Wärmeträgerkreislauf beaufschlagt wird. Die Luftkammer kann dabei auf der heißen Seite oder auf der kalten Seite des Regenerativwärmetauschers angeordnet sein. Durch die kontinuierliche Beaufschlagung der Luftkammer, wird das zwischen den Heizflächen befindliche Rauchgasvolumen völlig verdrängt und kann dadurch beim Eintreten der Heizfläche auf die Wärmeträgerseite (z.B. Luftseite) nicht in den Wärmeträgerkreislauf gelangen und dort zu Verschmutzungen oder Ablagerungen führen.

Um weiterhin zu verhindern, daß mit Schadstoffen belastete Rauchgase in den Wärmeträgerkreislauf eingeschleppt werden, kann im Wärmeträgerkreislauf stromauf vom Regenerativwärmetauscher ein Umwälzgebläse angeordnet sein, durch das der Druck auf der Luftseite oberhalb des Drucks auf der Rauchgasseite des Regenerativwärmetauschers gehalten wird. Geringfügige Undichtigkeiten der Radialdichtungen zwischen der Rauchgasseite und der Luftseite des rotierenden Wärmetauschers führen dann allenfalls dazu, daß Luft aus dem Wärmeträgerkreislauf in den Rauchgasstrom gelangt. Des weiteren läßt sich aufgrund des Überdrucks im Wärmeträgerkreislauf auf einfache Weise die Luftkammer mit Luft aus dem Wärmeträgerkreislauf über eine Abzweigleitung beaufschlagen.

Die Erfindung wird nachstehend anhand eines in der Zeichnung dargestellten Ausführungsbeispiels des näheren erläutert. In der Zeichnung zeigen:

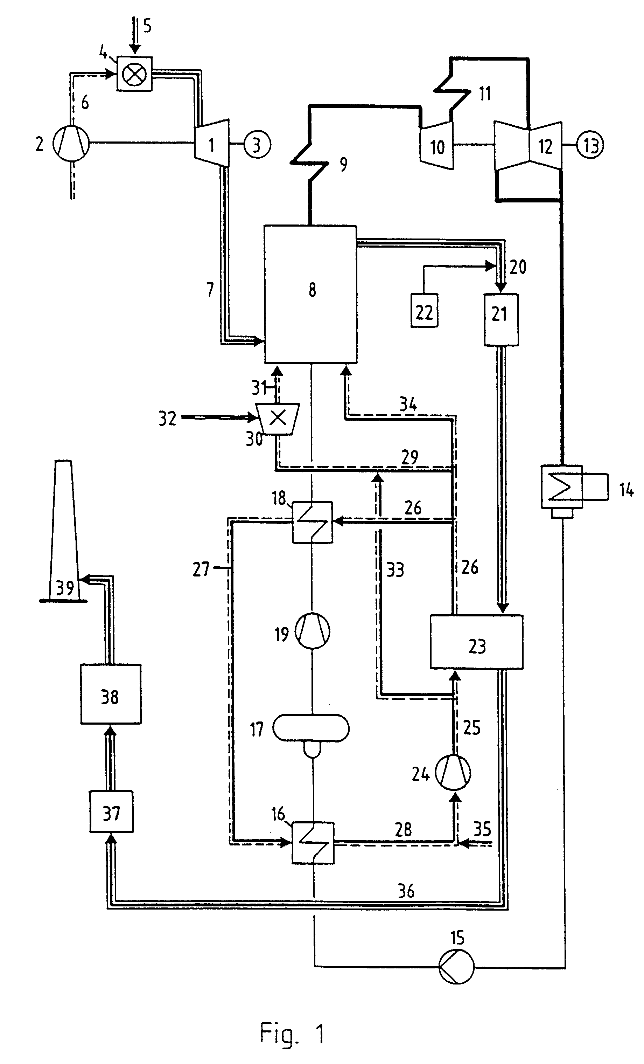

- Fig. 1: eine schematische Darstellung eines Kombikraftwerks mit dem erfindungsgemäßen Wärmetauscherkreislauf,
- Fig. 2: eine vergrößerte schematische Darstellung des erfindungsgemäßen Wärmetauscherkreislaufs und
- Fig. 3: eine schematische Draufsicht eines erfindungsgemäßen Wärmetauschers.

Das Kombikraftwerk weist eine Gasturbine 1 auf, die einen Verdichter 2 und einen Generator 3 antreibt. Die vom Verdichter 2 kommende Luft wird über eine Leitung 6 einer Brennkammer 4 zugeführt, in die über eine Brennstoffzufuhr 5 Brenngas oder flüssiger Brennstoff eingespeist wird. Da die Verbrennung in der Brennkammer 4 mit erheblichem Luftüberschuß ablaufen muß, um die Eintrittstemperatur der Gasturbine 1 nicht über das zulässige Maß ansteigen zu lassen, enthalten die Turbinenabgase in der Abgasleitung 7 noch erhebliche Mengen Restsauerstoff. Die heißen Turbinenabgase können daher direkt der Feuerung eines Dampferzeugers 8 zugeführt werden und dienen als Sauerstoffträger für den dem Brenner des Dampferzeugers 8 zugeführten Brennstoff.

Der im Dampferzeuger 8 erzeugte Dampf gelangt über einen Überhitzer 9 in eine Hochdruckdampfturbine 10 und wird von dort über einen Zwischenüberhitzer 11 einer zweiflutigen Niederdruckdampfturbine 12 zugeleitet. Die Turbinen 10, 12 treiben einen weiteren Generator 13 an. Der Abdampf der Niederdruckturbine 12 wird einem Kondensator 14 zugeleitet, dort kondensiert und mittels einer Kondensatpumpe 14 über einen Kondensatvorwärmer 16, einem Kodensattank 17 zugeführt. Von dort gelangt das Kondensat als Kesselspeisewasser über eine Speisewasserpumpe 19 und einen Speisewasservorwärmer 18 wieder in den Dampferzeuger 8.

Die Rauchgase aus dem Dampferzeuger 8 werden über eine Rauchgasleitung 20 durch eine katalytische oder nicht katalytische Reduktionsstufe 21 für Stickoxide geführt. Dem Rauchgas wird in der Rauchgasleitung 20 Ammoniak aus einem Ammoniaktank 22 zugeführt. Die Rauchgase gelangen dann in einen rotierenden Regenerativwärmetauscher 23 und von dort über eine Rauchgasleitung 36, einen Entstauber 37 und eine Rauchgasentschwefelungsanlage 38 in einen Kamin 39 sowie von dort ins Freie.

Die Luftseite des Wärmetauschers 23 liegt in einem Wärmeträgerkreislauf aus einem Umwälzgebläse 24 und den Luftleitungen 25, 26, 27, 28. Zwischen den Luftleitungen 26, 27 ist der Speisewasservorwärmer 18 und zwischen den Luftleitungen 27, 28 der Kondensatvorwärmer 16 angeordnet. Über eine Abzweigung 29 gelangt Luft in eine Kohlenstaubmühle 30 und von dort ein Kohlenstaub-Luftgemisch über eine Leitung 31 zum Dampferzeuger 8. Die Kohlenstaubmühle 30 ist mit eine Kohlezufuhr 32 verbunden.

Über eine vor dem Wärmetauscher 23 abgehende Entnahmeleitung 33 läßt sich der Luftleitung 29 weniger erwärmte Luft beimischen, so daß sich die Temperatur der der Kohlenstaubmühle 30 zugeführten Luft einstellen läßt. Falls die Menge des über die Turbinenabgase durch die Leitung 7 der Feuerung des Dampferzeugers 8 zugeführten Sauerstoffs nicht zur vollständigen Verbrennung des zugeführten Brennstoffs ausreicht, kann der Feuerung über eine Leitung 34 zusätzliche Verbrennungsluft zugeführt werden. Die der Kohlenstaubmühle 30 und dem Dampferzeuger 8 zugeführte Luft wird über eine Frischluftleitung 35 stromauf vom Umwälzgebläse 24 ersetzt.

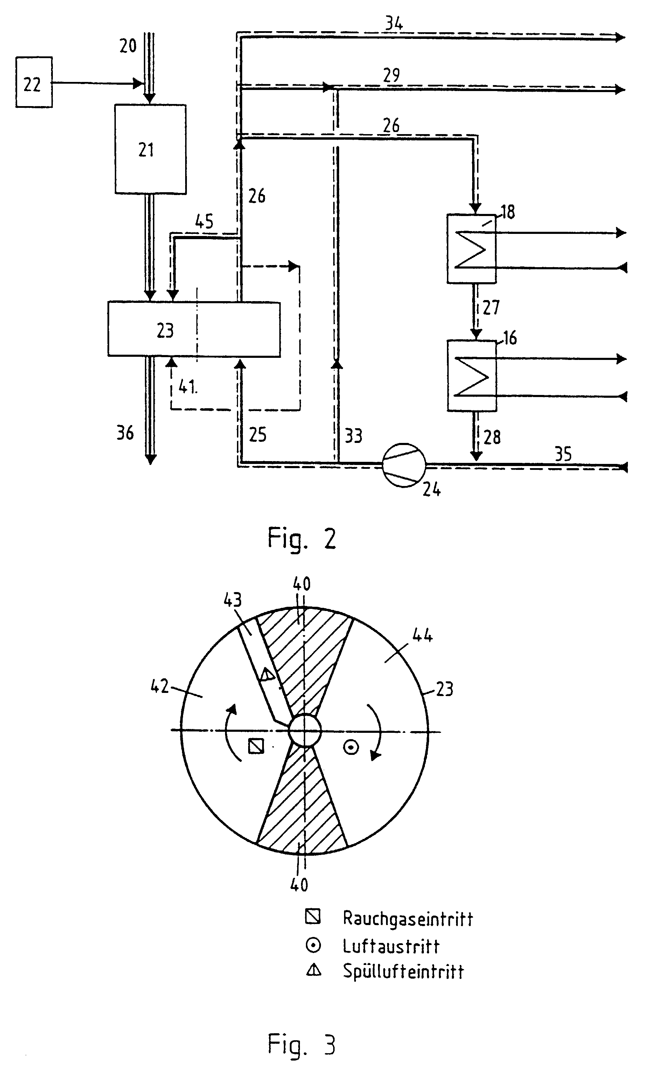

Wie aus Fig. 3 ersichtlich, weist der Regenerativwärmetauscher 23 Radialdichtungen 40 auf, die die Rauchgasseite 32 von der Luftseite 34 des Wärmetauschers 23 trennen. Diese Radialdichtungen 40 brauchen nicht vollständig dicht zu sein, was den Bauaufwand herabsetzt, da im Wärmeträgerkreislauf 24, 25, 26, 27, 28 Überdruck gegenüber der Rauchgasseite 42 herrscht und sich somit eine geringfügige Luftströmung durch die Radialdichtungen 40 hindurch von der Luftseite 44 zur Rauchgasseite 42 ergibt.

Die Wärmetauscherflächen des Wärmetauschers 23 lassen sich kontinuierlich durch einen Staubbläser in Form einer Luftkammer 43 von Ablagerungen befreien. Diese Luftkammer ist in Drehrichtung der Wärmetauscherflächen des Wärmetauschers 23 unmittelbar vor einer der Radialdichtungen 40 auf der Rauchgasseite 42 angeordnet und wird über eine Spülluftleitung 45 mit Luft aus dem Wärmeträgerkreislauf 24 bis 28 beaufschlagt. Mittels dieser Spülluft werden Ablagerungen von den Wärmetauscherflächen abgeblasen. Die Spülluftleitung 45 mündet auf der heißen Seite des Wärmetauschers 23, jedoch läßt sich die Luftkammer auch auf der kalten Seite des Wärmetauschers 23 anordnen und mittels einer gestrichelt dargestellten Spülluftleitung 41 beaufschlagen. Die Spülluft läßt sich sowohl aus der Luftleitung 25 stromauf vom Wärmetauscher 23 als auch aus der Luftleitung 26 stromab vom Wärmetauscher 23 entnehmen.

Die Erfindung läßt sich mit Vorteil auch bei einem üblichen Kohlekraftwerk mit einer katalytischen oder nicht katalytischen Reduktionsstufe in Anschluß an den Dampferzeuger bzw. allgemein immer dann, wenn die Gefahr von Ablagerungen und Korrosion besteht, einsetzen. Des weiteren ist es möglich, andere Fluide als Luft im Wärmekreislauf umzuwälzen, insbesondere solche, die auch bei höheren Temperaturen bis über 300 °C einen niedrigen Dampfdruck aufweisen.

## Patentansprüche

1. Feuerungsanlage mit einem im Rauchgasstrom (20, 36) im Anschluß an eine einem Dampferzeuger (8) nachgeschaltete Reduktionsstufe (21) für Stickoxide und vor einem Rauchgasentstauber (37) angeordneten, als Regenerativ-Wärmetauscher ausgebildeten Wärmetauscher (23), der zur Aufnahme und Rückübertragung von Wärme aus dem Abgas des Dampferzeugers (8) in einem Wärmeträgerkreislauf (24 bis 28) liegt, der einen weiteren Wärmetauscher (16, 18) zur Aufnahme von Wärme aus dem Wärmeträgerkreislauf aufweist, wobei ein Teil der im Regenerativ-Wärmetauscher (23) erhitzten Luft in dem Kreislauf über den weiteren Wärmetauscher (16, 18) zurück zum Regenerativ-Wärmetauscher (23) strömt,
**dadurch gekennzeichnet,**
daß in dem Regenerativ-Wärmetauscher (23) das Rauchgas und Luft zum Wärmetausch gelangen.

2. Feuerungsanlage nach Anspruch 1,
**dadurch gekennzeichnet,**
daß der weitere Wärmetauscher ein Speisewasservorwärmer (18) ist.

3. Feuerungsanlage nach Anspruch 1,
**dadurch gekennzeichnet,**
daß der weitere Wärmetauscher ein Kondensatvorwärmer (16) ist.

4. Feuerungsanlage nach einem oder mehreren der Ansprüche 1 bis 3,
**dadurch gekennzeichnet,**
daß der Wärmeträgerkreislauf (24 bis 28) im Rauchgasstrom (20, 36) eines kombinierten Gasturbinen-Dampfturbinenprozesses (1, 2, 4; 8 bis 13) angeordnet ist.

5. Feuerungsanlage nach einem der Ansprüche 1 bis 3,
**dadurch gekennzeichnet,**
daß der Wärmeträgerkreislauf (24 bis 28) im Rauchgasstrom (20, 36) eines mit Kohlenstaub nachgefeuerten Dampferzeugers (8) angeordnet ist.

6. Feuerungsanlage nach Anspruch 1,
**dadurch gekennzeichnet,**
daß ein Teilstrom (29) der erwärmten Luft abgezweigt und einer Kohlenstaubmühle zugeleitet wird.

7. Feuerungsanlage nach Anspruch 1,
**dadurch gekennzeichnet,**
daß ein Teilstrom (34) der erwärmten Luft abgezweigt und als zusätzliche Verbrennungsluft einem oder mehreren Brennern des Dampferzeugers (8) zugeleitet wird.

8. Feuerungsanlage nach einem der Ansprüche 1 bis 7,
**gekennzeichnet durch**
einen Regenerativwärmetauscher (23) mit rotierender Heizfläche oder rotierenden Rauchgashauben.

9. Feuerungsanlage nach Anspruch 8,
**gekennzeichnet durch**
auf der Rauchgasseite (42) des Regenerativwärmetauschers (23) angeordnete Staubbläser (43).

10. Feuerungsanlage nach Anspruch 9,
**gekennzeichnet durch**
eine auf der Rauchgasseite (42) vor einer Radialdichtung (40) angeordnete, durch Luft aus dem Wärmeträgerkreislauf (24, 28) beaufschlagte Luftkammer (43) als Staubbläser.

11. Feuerungsanlage nach Anspruch 10,
**dadurch gekennzeichnet,**
daß die Luftkammer (43) auf der heißen Seite (43) des Regenerativwärmetauschers (23) angeordnet ist.

12. Feuerungsanlage nach Anspruch 10,
**dadurch gekennzeichnet,**
daß die Luftkammer (43) auf der kalten Seite des Regenerativwärmetauschers (23) angeordnet ist.

13. Feuerungsanlage nach einem oder mehreren der Ansprüche 9 bis 12,
**dadurch gekennzeichnet,**
daß im Wärmeträgerkreislauf (24 - 28) stromauf vom Regenerativwärmetauscher (23) ein Umwälzgebläse (24) angeordnet ist und der Druck auf der Luftseite (44) oberhalb des Drucks auf der Rauchgasseite (42) des Regenerativwärmetauschers (23) gehalten wird.

## Claims

1. Incineration plant with a heat exchanger (23), which is constructed as a regenerative heat exchanger, is arranged in the flue gas flow (20, 36) in connection to a reduction stage (21) - which is connected downstream of a steam generator (8) - for nitrogen oxide and ahead of a flue gas dust removing device (37), and for the purpose of the reception and recovery of heat from the waste gas lies in a heat carrier circuit (24 to 28) which has a further heat exchanger (16, 18) for the reception of heat from the heat carrier circuit, wherein a part of the air, which is heated in the regenerative heat exchanger (23), in the circuit flows back to the regenerative heat exchanger (23) by way of the further heat exchanger (16, 18), characterised in that the flue gas and air come into heat exchange in the regenerative heat exchanger (23).

2. Incineration plant according to claim 1, characterised in that the further heat exchanger is a feed water preheater (18).

3. Incineration plant according to claim 1, characterised in that the further heat exchanger is a condensate preheater (16).

4. Incineration plant according to one or more of claims 1 to 3, characterised in that the heat carrier circuit (24 to 28) is arranged in the flue gas flow (20, 36) of a combined gas turbine and steam turbine process (1, 2, 4; 8 to 13).

5. Incineration plant according to one or more of claims 1 to 3, characterised in that the heat carrier circuit (24 to 28) is arranged in the flue gas flow (20, 36) of a steam generator (8) refired with coal dust.

6. Incineration plant according to claim 1, characterised in that a partial flow (29) of the heated air is branched off and fed to a coal dust mill.

7. Incineration plant according to claim 1, characterised in that a partial flow (29) of the heated air is branched off and fed as additional combustion air to one or more burners of the steam generator (8).

8. Incineration plant according to one of claims 1 to 7, characterised by a regenerative heat exchanger (23) with rotating hot surface or rotating flue gas hood.

9. Incineration plant according to claim 8, characterised by dust blowers (43) arranged on the flue gas side (42) of the regenerative heat exchanger (23).

10. Incineration plant according to claim 9, characterised by an air chamber (43), which is arranged on the flue gas side (42) in front of a radial seal (40) and acted on by air from the heat carrier circuit (24, 28), as dust blowers.

11. Incineration plant according to claim 10, characterised in that the air chamber (43) is arranged on the hot side (43) of the regenerative heat exchanger (23).

12. Incineration plant according to claim 10, characterised in that the air chamber (43) is arranged on the cold side (43) of the regenerative heat exchanger (23).

13. Incineration plant according to one or more of claims 9 to 12, characterised in that a circulating blower (24) is arranged in the heat carrier circuit (24 to 28) upstream of the regenerative heat exchanger (23) and the pressure at the air side (44) is kept above the pressure at the flue gas side (42) of the regenerative heat exchanger (23).

## Revendications

1. Usine d'incinération présentant un échangeur de chaleur (23), exécuté sous forme d'un échangeur de chaleur à régénération, disposé dans le courant de gaz de fumée (20, 36) derrière une étape de réduction (21) pour les oxydes d'azote, qui est placée après un générateur de vapeur (8), et avant un dépoussiéreur de gaz de fumée (37), placé dans un circuit caloporteur (24 à 28) pour l'absorption et le recyclage de la chaleur provenant des gaz résiduaires du générateur de vapeur (8), ledit circuit présentant un autre échangeur de chaleur (16, 18) pour l'absorption de la chaleur du circuit caloporteur, une partie de l'air chauffé dans l'échangeur de chaleur à régénération (23) s'écoulant dans le circuit, via l'autre échangeur de chaleur (16, 18), en retour vers l'échangeur de chaleur à régénération (23), caractérisée en ce que les gaz de fumée et l'air arrivent dans l'échangeur de chaleur à régénération (23) pour l'échange de chaleur.

2. Usine d'incinération selon la revendication 1, caractérisée en ce qu'un préchauffeur (18) de l'eau d'alimentation est adjoint à l'autre échangeur de chaleur.

3. Usine d'incinération selon la revendication 1, caractérisée en ce qu'un préchauffeur (16) des condensats est adjoint à l'autre échangeur de chaleur.

4. Usine d'incinération selon une quelconque des revendications 1 à 3, caractérisée en ce que le circuit caloporteur (24 à 28) comporte, dans le courant de gaz de fumée (20, 36), un procédé combiné de turbines à gaz et turbines à vapeur (1, 2, 4 ; 8 à 13).

5. Usine d'incinération selon une quelconque des revendications 1 à 3, caractérisée en ce que le circuit caloporteur (24 à 28) dans le courant de gaz de fumée (20, 36) comporte un générateur de vapeur (8) soumis à un post-chauffage à la poussière de charbon.

6. Usine d'incinération selon la revendication 1, caractérisée en ce qu'un courant partiel (29) de l'air réchauffé est dévié et alimenté dans un broyeur de poussière de charbon.

7. Usine d'incinération selon la revendication 1, caractérisée en ce qu'un courant partiel (34) de l'air réchauffé est dévié de l'air et alimenté, comme air de combustion supplémentaire, dans un ou plusieurs brûleurs du générateur de vapeur (8).

8. Usine d'incinération selon une quelconque des revendications 1 à 7, caractérisée par un échangeur de chaleur à régénération (23) comportant des surfaces de chauffage rotatives ou des bonnets à gaz de fumée rotatifs.

9. Usine d'incinération selon la revendication 8, caractérisée par des souffleurs de poussières (43) adjoints sur le côté des gaz de fumée (42) de l'échangeur de chaleur à régénération (23).

10. Usine d'incinération selon la revendication 9, caractérisée par une chambre d'air (43) comme souffleur de poussières, alimentée par de l'air provenant du circuit caloporteur (24, 28) et disposée sur le côté des gaz de fumée (42) devant un joint radial (40).

11. Usine d'incinération selon la revendication 10, caractérisée en ce que la chambre d'air (43) est disposée sur le côté chaud (43) de l'échangeur de chaleur à régénération (23).

12. Usine d'incinération selon la revendication 10, caractérisée en ce que la chambre d'air (43) est disposée sur le côté froid de l'échangeur de chaleur à régénération (23).

13. Usine d'incinération selon une quelconque des revendications 9 à 12, caractérisée en ce qu'on a disposé, dans le circuit caloporteur (24-28), en amont de l'échangeur de chaleur à régénération (24), un ventilateur de circulation (24) et en ce que la pression du côté de l'air (44) est maintenue au-dessus de la pression du côté des gaz de fumée (42) de l'échangeur de chaleur à régénération (23).
